# EUROPEAN PATENT APPLICATION

(11) **EP 3 733 774 A1**
(43) Date of publication of application: **04.11.2020**
(21) Application number: 18894636.2
(22) Date of filing: 27.11.2018
(51) Int. Cl.: C08L 71/02, C08F 290/14, C08K 5/14, C08K 5/3415, G03G 15/02, G03G 15/08, G03G 15/16

(54) **RUBBER COMPOSITION**

(30) Priority: 27.12.2017 JP 2017251683
(71) Applicant: OSAKA SODA CO., LTD., Osaka-shi, Osaka 550-0011 (JP)
(72) Inventor: UNO,Kazuki, Osaka-shi, Osaka 550-0011 (JP); UDO,Shinichi, Osaka-shi, Osaka 550-0011 (JP); YAJIMA,Naoya, Osaka-shi, Osaka 550-0011 (JP); YASUDA,Yoritaka, Osaka-shi, Osaka 550-0011 (JP); KOTO,Yuma, Osaka-shi, Osaka 550-0011 (JP)
(74) Representative: Cabinet Beau de Loménie
(86) International application number: PCT/JP2018/043540
(87) International publication number: WO 2019/130947

(57) **Abstract**

A rubber composition comprises a polyether-based polymer as a rubber component (a), a crosslinking agent (b), m-phenylenedimaleimide (c), and an antioxidant (d). It is preferable that the polyether-based polymer includes a constituent unit including at least two units selected from ethylene oxide, propylene oxide, epichlorohydrin, or allyl glycidyl ether. It is more preferable that the antioxidant (d) is at least one selected from a benzimidazole-based antioxidant, a nickel salt of a dialkyldithiocarbamic acid, an amine-based antioxidant, a phenol-based antioxidant, a thiourea-based antioxidant, an organic thio acid, or a phosphorous acid.

## Description

### BACKGROUND OF THE INVENTION

### Field of the Invention

The rubber composition according to the present invention is excellent in the crosslinking property, and is used as a fuel hose, an air hose, or a tube material in automotive application, and is used, in application to office automation, in a semiconductive roller or a belt for development, charging, or transfer in an electrophotographic process in a copier or a printer.

### Description of the Related Art

In general, polyether polymers such as epichlorohydrin-based polymers are widely used as materials having an excellent physical property by the crosslinking, and are used as fuel hoses, air hoses, and tube materials in automotive application.

The polyether polymers such as epichlorohydrin-based polymers have a semiconductive property, so that the polyether polymers are used in charging rolls, transfer rolls, and developing rolls used in contact charging systems.

In all usage, a rubber material is preferably prepared using a composition having an appropriate crosslinking property from the viewpoint of utilizing the property of the rubber material.

In order to obtain the crosslinking property, a crosslinking auxiliary is mixed with the composition. As the crosslinking auxiliary, ethylene dimethacrylate, diallyl phthalate, m-phenylenedimaleimide, triallyl isocyanurate, trimethylolpropane trimethacrylate, liquid vinyl polybutadiene, or the like has been conventionally used, and in recent years, a study has been conducted using a specific maleimide (Patent Document 1).

### Prior Art Document

### Patent Document

Patent Document 1: JP-A-2012-8321

### SUMMARY OF THE INVENTION

However, there is a problem that when m-phenylenedimaleimide is used in a composition including a polyether-based polymer as a rubber component, the rubber material does not have a sufficient property, and there is a need for a new composition in which m-phenylenedimaleimide is used.

The present inventors have conducted research and, as a result, found a problem that when m-phenylenedimaleimide is used, crosslinking reversion (vulcanization reversion) is caused during the crosslinking of the composition. An object of the present invention is to solve the problem.

The present inventors have found that the problem is solved with a rubber composition including a polyether-based polymer as a rubber component (a), a crosslinking agent (b), m-phenylenedimaleimide (c), and an antioxidant (d), and completed the present invention.

That is, the present invention relates to Items described below.
Item 1. A rubber composition including a polyether-based polymer as a rubber component (a), a crosslinking agent (b), m-phenylenedimaleimide (c), and an antioxidant (d) .
Item 2. The rubber composition according to Item 1, wherein the polyether-based polymer includes a constituent unit including at least two units selected from ethylene oxide, propylene oxide, epichlorohydrin, or allyl glycidyl ether.
Item 3. The rubber composition according to Item 1 or 2, wherein the antioxidant (d) is at least one selected from a benzimidazole-based antioxidant, a nickel salt of a dialkyldithiocarbamic acid, an amine-based antioxidant, a phenol-based antioxidant, a thiourea-based antioxidant, an organic thio acid, or a phosphorous acid.
Item 4. The rubber composition according to any one of Items 1 to 3, wherein the crosslinking agent (b) is an organic peroxide.
Item 5. A rubber material using the rubber composition according to any one of Items 1 to 4.
Item 6. A semiconductive rubber roll or a semiconductive endless rubber belt including the rubber material according to Item 5.
Item 7. An electrophotographic device including the semiconductive rubber roll or the semiconductive endless rubber belt according to Item 6.

In the rubber composition according to the present invention, the property of the rubber material can be utilized because during the crosslinking, appropriate crosslinking torque is obtained, the crosslinking is appropriately performed, and crosslinking crosslinking reversion (vulcanization reversion) is not caused.

### DETAILED DESCRIPTION OF THE PREFERRED EMBODIMENTS

Hereinafter, the present invention will be described in detail.

The rubber composition according to the present invention includes a polyether-based polymer as a rubber component (a), a crosslinking agent (b), m-phenylenedimaleimide (c), and an antioxidant (d).

The polyether-based polymer (rubber) used in the present invention is a homopolymer of a compound or a copolymer of compounds selected from an alkylene oxide such as ethylene oxide, propylene oxide, or n-butylene oxide, a glycidyl such as glycidyl methyl ether, ethyl glycidyl ether, n-glycidyl ether, allyl glycidyl ether, or phenyl glycidyl ether, an epihalohydrin such as epichlorohydrin or epibromohydrin, styrene oxide, or the like, and the homopolymers or copolymers thereof can be used singly or in combination of two or more.

The polyether-based polymer preferably includes a constituent unit including two units selected from epichlorohydrin, propylene oxide, ethylene oxide, or allyl glycidyl ether, more preferably includes a constituent unit including units of ethylene oxide and allyl glycidyl ether, and particularly preferably includes a constituent unit including units of epichlorohydrin, ethylene oxide, and allyl glycidyl ether.

The polyether-based polymer preferably includes the constituent unit based on ethylene oxide at a content of 4 to 89 mol%, more preferably 24 to 79 mol%, and particularly preferably 34 to 74 mol% with respect to the total polymerization units.

The polyether-based polymer preferably includes the constituent unit based on allyl glycidyl ether at a content of 1 to 15 mol%, more preferably 1 to 12 mol%, and particularly preferably 1 to 10 mol% with respect to the total polymerization units.

The polyether-based polymer preferably includes the constituent unit based on epichlorohydrin at a content of 10 to 95 mol%, more preferably 20 to 75 mol%, and particularly preferably 25 to 65 mol% with respect to the total polymerization units.

The semiconductive rubber composition according to the present invention preferably includes the polyether-based polymer being a polymer of an oxirane compound at a content of 10% by mass or more, more preferably 30% by mass or more, particularly preferably 70% by mass or more, and most preferably 90% by mass or more based on 100 parts by mass of the total amount of the rubber component (a).

Specific examples of the polyether-based polymer according to the present invention include an epichlorohydrin homopolymer, an epichlorohydrin-ethylene oxide copolymer, an epichlorohydrin-propylene oxide copolymer, an epichlorohydrin- ethylene oxide-allyl glycidyl ether terpolymer, an epichlorohydrin-propylene oxide-allyl glycidyl ether terpolymer, an ethylene oxide-propylene oxide-allyl glycidyl ether terpolymer, and an epichlorohydrin-ethylene oxide-propylene oxide-allyl glycidyl ether quaterpolymer, and the polyether-based polymer may include a plurality of polymers blended. The molecular weight of the polyether-based polymer is not particularly limited as long as the polyether-based polymer usually has a Mooney viscosity of about ML_{1 + 4} (100°C) = 20 to 150.

The polyether-based polymer can be manufactured by a solution polymerization method, a slurry polymerization method, or the like at a temperature in the range of -20 to 100°C using a catalyst that can catalyze ring-opening polymerization of an oxirane compound. Examples of the catalyst include a catalyst system in which an organoaluminum compound is mainly used and reacted with an oxoacid compound of water or phosphorus, acetylacetone, or the like, a catalyst system in which an organozinc compound is mainly used and reacted with water, and an organotin-phosphoric acid ester condensate catalyst system. For example, the polyether-based polymer according to the present invention can be manufactured using an organotin-phosphoric acid ester condensate catalyst system described in US 3,773,694 by the present applicant. In the copolymerization by such a manufacturing method, it is preferable to copolymerize the above-described components substantially at random.

The rubber composition according to the present invention may include only the polyether-based polymer being a polymer of an oxirane compound as the rubber component (a), or may further include another kind of rubber other than the polyether-based polymer. Examples of the rubber other than the polyether-based polymer being a polymer of an oxirane compound include natural rubber and synthetic rubber. Examples of the synthetic rubber include isoprene rubber (IR), 1,2-polybutadiene (VBR), styrene butadiene rubber (SBR), butyl rubber (IIR), ethylene propylene rubber (EPM), ethylene propylene diene rubber (EPDM), chloroprene rubber (CR), chlorosulfonated polyethylene (CSM), chlorinated polyethylene (CPE), acrylic rubber (ACM), acrylonitrile butadiene rubber (NBR), and hydrogenated acrylonitrile butadiene rubber (H-NBR), and the synthetic rubber is preferably at least one selected from ethylene propylene rubber (EPDM), chloroprene rubber (CR), or acrylonitrile butadiene rubber (NBR).

When another kind of rubber other than the polyether-based polymer is included as the rubber component of the rubber composition according to the present invention, the rubber composition preferably includes, in the rubber component, 10 to 90% by mass of the polyether-based polymer and 90 to 10% by mass of another kind of rubber other than the polyether-based polymer, more preferably includes 30 to 90% by mass of the polyether-based polymer and 70 to 10% by mass of another kind of rubber other than the polyether-based polymer, and particularly preferably includes 70 to 90% by mass of the polyether-based polymer and 30 to 10% by mass of another kind of rubber other than the polyether-based polymer.

Examples of the crosslinking agent (b) according to the present invention include known cross-linking agents utilizing the reactivity of a chlorine atom such as polyamines, thioureas, thiadiazoles, triazines, quinoxalines, and bisphenols, and known crosslinking agents utilizing the reactivity of a double bond in a side chain such as organic peroxides, sulfur, morpholine polysulfides, and thiuram polysulfides. The crosslinking agent (b) is preferably an organic peroxide or sulfur, and more preferably an organic peroxide.

Examples of the polyamines include ethylenediamine, hexamethylenediamine, diethylenetriamine, triethylenetetramine, hexamethylenetetramine, p-phenylenediamine, cumene diamine, N,N'-dicinnamylidene-1,6-hexanediamine, ethylenediamine carbamate, and hexamethylenediamine carbamate.

Examples of the thioureas include 2-mercaptoimidazoline, 1,3-diethylthiourea, 1,3-dibutylthiourea, and trimethylthiourea.

Examples of the thiadiazoles include 2,5-dimercapto-1,3,4-thiadiazole and 2-mercapto-1,3,4-thiadiazole-5-thiobenzoate.

Examples of the triazines include 2,4,6-trimercapto-1,3,5-triazine, 2-hexylamino-4,6-dimercaptotriazine, 2-diethylamino-4,6-dimercaptotriazine, 2-cyclohexylamino-4,6-dimercaptotriazine, 2-dibutylamino-4,6-dimercaptotriazine, 2-anilino-4,6-dimercaptotriazine, and 2-phenylamino-4,6-dimercaptotriazine.

Examples of the quinoxalines include 2,3-dimercaptoquinoxaline, quinoxaline-2,3-dithiocarbonate, 6-methylquinoxaline-2,3-dithiocarbonate, and 5,8-dimethylquinoxaline-2,3-dithiocarbonate.

Examples of the bisphenols include bisphenol AF and bisphenol S.

Examples of the organic peroxides include tert-butyl hydroperoxide, 1,1,3,3-tetramethylbutyl hydroperoxide, cumene hydroperoxide, diisopropylbenzene hydroperoxide, di-tert-butyl peroxide, dicumyl peroxide, tert-butyl cumyl peroxide, 1,1-tert-butylperoxycyclohexane, 2,5-dimethyl-2,5-ditert-butylperoxyhexane, 2,5-dimethyl-2,5-ditert dibutylperoxyhexine-3, 1,3-bistert-butylperoxyisopropylbenzene, 2,5-dimethyl-2,5-dibenzoylperoxyhexane, 1,1-bistert-butylperoxy-3,3,5-trimethylcyclohexane, n-butyl-4,4-bistert-butylperoxyvalerate, benzoyl peroxide, tert-butyl peroxide isobutyrate, tert-butyl peroxy 2-ethylhexanoate, tert-butyl peroxybenzoate, tert-butylperoxy isopropyl carbonate, tert-butylperoxy allyl monocarbonate, and p-methylbenzoyl peroxide.

Examples of the morpholine polysulfides include morpholine disulfide.

Examples of the thiuram polysulfides include tetramethylthiuram disulfide, tetraethylthiuram disulfide, tetrabutylthiuram disulfide, dipentamethylenethiuram tetrasulfide, and dipentamethylenethiuram hexasulfide.

The lower limit of the mixing amount of the crosslinking agent (b) is preferably 0.1 parts by mass or more, and more preferably 0.3 parts by mass or more, and the upper limit is preferably 10 parts by mass or less, and more preferably 5 parts by mass or less based on 100 parts by mass of the rubber component (a).

The lower limit of the mixing amount of the m-phenylenedimaleimide (c) is preferably 0.01 parts by mass or more, more preferably 0.05 parts by mass or more, still more preferably 0.1 parts by mass or more, even more preferably 0.2 parts by mass or more, and particularly preferably 0.3 parts by mass or more, and the upper limit is preferably 10 parts by mass or less, more preferably 5 parts by mass or less, and particularly preferably 3 parts by mass or less based on 100 parts by mass of the rubber component (a).

The antioxidant (d) according to the present invention is preferably at least one selected from a benzimidazole-based antioxidant, a nickel salt of a dialkyldithiocarbamic acid, an amine-based antioxidant, a phenol-based antioxidant, a thiourea-based antioxidant, an organic thio acid, or a phosphorous acid, more preferably a phenol-based antioxidant, and particularly preferably a bisphenol-based antioxidant.

Examples of the benzimidazole-based antioxidant include 2-mercaptobenzimidazole, 2-mercaptomethylbenzimidazole, and zinc salts of 2-mercaptobenzimidazole.

Examples of the nickel salt of a dialkyldithiocarbamic acid include nickel diethyldithiocarbamate, nickel dibutyldithiocarbamate, and nickel diisononyldithiocarbamate.

Examples of the amine-based antioxidant include phenyl-α-naphthylamine, phenyl-p-naphthylamine, p-(p-toluenesulfonylamide)-diphenylamine, 4,4'-(α,α'-dimethylbenzyl)diphenylamine, 4,4'-dioctyldiphenylamine, high-temperature reaction products of diphenylamine and acetone, low-temperature reaction products of diphenylamine and acetone, low-temperature reaction products of diphenylamine, aniline, and acetone, reaction products of diphenylamine and diisobutylene, octylated diphenylamines, dioctylated diphenylamines, p,p'-dioctyldiphenylamine, mixtures of octylated diphenylamines, substituted diphenylamines, alkylated diphenylamines, mixtures of alkylated diphenylamines, mixtures of alkyl and aralkyl-substituted phenols by aralkylated diphenylamines, diphenylamine derivatives, N,N'-diphenyl-p-phenylenediamine, N-isopropyl-N'-phenyl-p-phenylenediamine, N,N'-di-2-naphthyl-p-phenylenediamine, N-cyclohexyl-N'-phenyl-p-phenylenediamine, N-phenyl-N'-(3-methacryloyloxy-2-hydroxypropyl)-p-phenylenediamine, N,N'-bis(1-methylheptyl)-p-phenylenediamine, N,N'-bis(1,4-dimethylpentyl)-p-phenylenediamine, N,N'-bis(1-ethyl-3-methylpentyl)-p-phenylenediamine, N-(1,3-dimethylbutyl)-N'-phenyl-p-phenylenediamine, mixtures of diallyl-p-phenylenediamines, phenyl hexyl-p-phenylenediamine, and phenyl octyl-p-phenylenediamine. Examples of the amine-based antioxidant further include condensates of an aromatic amine and an aliphatic ketone, butyraldehyde-aniline condensates, a 2,2,4-trimethyl-1,2-dihydroquinoline polymer, and 6-ethoxy-2,2,4-trimethyl-1,2-dihydroquinoline, and the amine-based antioxidant is preferably at least one selected from a 2,2,4-trimethyl-1,2-dihydroquinoline polymer, 4,4'-bis(a,a-dimethylbenzyl)diphenylamine, or N,N'-di-2-naphthyl-p-phenylenediamine.

Examples of the phenol-based antioxidant include 2,5-di-(t-amyl)-hydroquinone, 2,5-di-t-butylhydroquinone, and hydroquinone monomethyl ether. Examples of a monophenol-based antioxidant include 1-oxy-3-methyl-4-isopropylbenzene, 2,6-di-t-butylphenol, 2,6-di-t-butyl-4-ethylphenol, 2,6-dit-butyl-4-methylphenol, 2,6-di-t-butyl-4-sec-butylphenol, butylhydroxyanisole, 2-(1-methylcyclohexyl)-4,6-dimethylphenol, 2,6-di-t-butyl-α-dimethylamino-p-cresol, alkylated phenols, aralkyl-substituted phenols, phenol derivatives, 2,2'-methylenebis(4-methyl-6-tert-butylphenol), 2,2'-methylenebis(4-methyl-6-cyclohexylphenol), 2,2'-methylenebis(4-ethyl-6-tert-butylphenol), 4,4'-methylenebis(2,6-di-tert-butylphenol), 2,2-methylenebis(6-α-methyl-benzyl-p-cresol), 4,4'-butylidenebis(3-methyl-6-tert-butylcresol), 2,2'-ethylidenebis(4,6-di-tertbutylphenol), 1,1'-bis(4-hydroxyphenyl)-cyclohexane, 2,2'-dihydroxy-3,3'-di-(α-methylcyclohexyl)-5,5-dimethyldiphenylmethane, alkylated bisphenols, butylation reaction products of p-cresol and dicyclopentadiene, 1,3,5-trimethyl-2,4,6-tris(3,5-di-tert-butyl-4-hydroxybenzyl)benzene, 1,3,5-tris(4-tert-butyl-3-hydroxy-2,6-dimethylbenzyl)isocyanurate, 2-tert-butyl-6-(3'-tert-butyl-5'-methyl-2'-hydroxybenzyl)-4-methylphenyl acrylate, 2-[1-(2-hydroxy-3,5-di-tert-pentylphenyl)-ethyl]-4,6-di-tert-pentylphenyl acrylate, 3,9-bis[2-{3(3-tert-butyl-4-hydroxy-5-methylphenyl)propionyloxy}-1,1-dimethylethyl]-2,4,8,10-tetraoxaspiro[5,5]undecane, 3,3-bis(3-tert-butyl-4-hydroxyphenyl)ethylene ester butyric acid, 3,5-di-tert-butyl-4-hydroxyhydrocinnamic acid triester of 1,3,5-tri(2-hydroxyethyl)-s-triazine-2,4,6-(1H,3H,5H)trione, modified polyalkyl phosphite polyphenol, 4,4'-thiobis(6-tert-butyl-3-methylphenol), 4,4'-thiobis(3-methyl-6-tert-butylphenol), 4,4'-thiobis-(6-tert-butyl-o-cresol), 4,4'-di and tri-thiobis-(6-tert-butyl-o-cresol), bis(3,5-di-tert-butyl-4-hydroxybenzyl)sulfide, 1,1,3-tris-(2-methyl-4-hydroxy-5-tert-butylphenyl)butane, 4,4'-butylidenbis(3-methyl-6-tert-butylphenol), 2,2-thiobis(4-methyl-6-tert-butylphenol), n-octadecyl-3-(4'-hydroxy-3',5'-di-tert-butylphenyl)propionate, tetrakis-[methylene-3-(3',5'-di-tert-butyl-4'-hydroxyphenyl)propionate]methane, pentaerythritol-tetrakis[3-(3,5-di-tert-butyl-4-hydroxyphenyl)propionate], triethylene glycol-bis[3-(3-tert-butyl-5-methyl-4-hydroxyphenyl)propionate], 1,6-hexanediol-bis[3-(3,5-di-tert-butyl-4-hydroxyphenyl)propionate], 2,4-bis(n-octylthio)-6-(4-hydroxy-3,5-di-tert-butylanilino)-1,3,5-triazine, tris-(3,5-di-tert-butyl-4-hydroxybenzyl)-isocyanurate, 2,2-thio-diethylenebis[3-(3,5-tert-butyl-4-hydroxyphenyl)propionate], N,N'-hexamethylebis(3,5-tert-butyl-4-hydroxyhydrocinnamamide), 2,4-bis[(octylthio)methyl]-o-cresol, 3,5-di-tert-butyl-4-hydroxybenzyl-phosphonate-diethyl ester, tetrakis[methylene(3,5-di-tert-butyl-4-hydroxyhydrocinnamate)]methane, octadecyl-3-(3,5-di-tert-butyl-4-hydroxyphenyl)propionate, hindered phenol, hindered bisphenol, 2-hydroxynaphthalene-3-carboyl-2'-methoxyanilide, 2-hydroxynaphthalene-3-carboyl-2'-methylanilide, 2-hydroxynaphthalene-3-carboyl-4'-methoxyanilide, 4,4'-bis(N,N'-dimethylamino)-triphenylmethane, 2-hydroxynaphthalene-3-carboylanilide, and 1,1'-bis(4,4'-N,N'-dimethylaminophenyl)-cyclohexane, and the monophenol-based antioxidant is preferably at least one selected from 2,2'-methylenebis(4-ethyl-6-tert-butylphenol), 2,2'-methylenebis(4-methyl-6-tert-butylphenol), 4,4'-butylidenebis(3-methyl-6-tert-butylphenol), or 4,4'-thiobis(3-methyl-6-tert-butylphenol). Among the above-described examples, the antioxidant is particularly preferably at least one selected from bisphenol-based antioxidants such as 4,4'-thiobis(3-methyl-6-tertbutylphenol), 2,2'-methylenebis(4-ethyl-6-tert-butylphenol), 2,2'-methylenebis(4-methyl-6-tert-butylphenol), and 4,4'-butylidenebis(3-methyl-6-tert-butylphenol).

Examples of the thiourea-based antioxidant include 1,3-bis(dimethylaminopropyl)-2-thiourea and tributylthiourea.

Examples of the organic thio acid include dilauryl thiodipropionate, distearyl thiodipropionate, dimyristyl-3,3'-thiodipropionate, ditridecyl-3,3'-thiodipropionate, pentaerythritol-tetrakis-(β-lauryl-thiopropionate), and dilauryl thiodipropionate.

Examples of the phosphorous acid include tris(nonylphenyl)phosphite, tris(mixed mono- and dinonylphenyl)phosphite, diphenyl mono(2-ethylhexyl) phosphite, diphenyl monotridecyl phosphite, diphenyl isodecyl phosphite, diphenyl isooctyl phosphite, diphenyl nonylphenyl phosphite, triphenyl phosphite, tris(tridecyl) phosphite, triisodecyl phosphite, tris(2-ethylhexyl) phosphite, tris(2,4-di-tert-butylphenyl) phosphite, tetraphenyldipropylene glycol diphosphite, tetraphenyltetra(tridecyl)pentaerythritol tetraphosphite, 1,1,3-tris(2-methyl-4-di-tridecylphosphite-5-tert-butylphenyl)butane, 4,4'-butylidenebis(3-methyl-6-tert-butyl-di-tridecylphosphite), 2,2'-ethylidenebis(4,6-di-tert-butylphenol)fluorophosphite, 4,4'-isopropylidenediphenol alkyl (C₁₂-C₁₅) phosphite, cyclic neopentane tetrayl bis(2,4-di-tert-butylphenylphosphite), cyclic neopentane tetrayl bis(2,6-di-tert-butyl-4-phenylphosphite), cyclic neopentane tetrayl bis(nonylphenylphosphite), bis(nonylphenyl)pentaerythritol diphosphite, dibutyl hydrogen phosphite, distearyl pentaerythritol diphosphite, hydrogenated bisphenol A, and a pentaerythritol phosphite polymer.

The lower limit of the mixing amount of the antioxidant (d) used in the rubber composition according to the present invention is preferably 0.01 parts by mass or more, more preferably 0.05 parts by mass or more, and particularly preferably 0.1 parts by mass or more, and the upper limit is preferably 3.5 parts by mass or less, more preferably 3.0 parts by mass or less, and particularly preferably 2.0 parts by mass or less based on 100 parts by mass of the rubber component (a).

In the rubber composition according to the present invention, a known acid acceptor may be used. When a known crosslinking agent utilizing the reactivity of a double bond in a side chain is used, it is not required to use a known acid acceptor. As the acid acceptor, metal compounds and/or inorganic microporous crystals are preferable. Examples of the metal compounds include oxides, hydroxides, carbonates, carboxylates, silicates, borates, and phosphites of Group II (Groups 2 and 12) metals in the periodic table, oxides, hydroxides, carboxylates, silicates, sulfates, nitrates, and phosphates of Group III (Groups 3 and 13) metals in the periodic table, and oxides, basic carbonates, basic carboxylates, basic phosphites, basic sulfites, and tribasic sulfates of Group IV (Groups 4 and 14) metals in the periodic table.

Specific examples of the metal compounds include magnesia, magnesium hydroxide, aluminum hydroxide, barium hydroxide, sodium carbonate, magnesium carbonate, barium carbonate, quicklime, slaked lime, calcium carbonate, calcium silicate, calcium stearate, zinc stearate, calcium phthalate, calcium phosphite, zinc white, tin oxide, litharge, red lead, lead white, dibasic lead phthalate, dibasic lead carbonate, tin stearate, basic lead phosphite, basic tin phosphite, basic lead sulfite, and tribasic lead sulfate, and examples include sodium carbonate, magnesia, magnesium hydroxide, quicklime, slaked lime, calcium silicate, and zinc white.

The term "inorganic microporous crystal" means a crystalline porous body, and the inorganic microporous crystals can be clearly distinguished from amorphous porous bodies such as silica gel and alumina. Examples of the inorganic microporous crystals include zeolites, aluminophosphate molecular sieves, layered silicates, synthetic hydrotalcites, and alkali metal titanates. Particularly preferable examples of the acid acceptor include synthetic hydrotalcites.

The zeolites are natural zeolites, synthetic zeolites of A-type, X-type, and Y-type, sodalites, natural and synthetic mordenite, various zeolites such as ZSM-5, and metal-substituted products thereof, and may be used singly or in combination of two or more. The metal-substituted products often have sodium as the metal. The zeolites preferably have a large acid acceptability, and A-type zeolites are preferable.

The synthetic hydrotalcites are represented by General Formula (1) described below.

Mg_{X}Zn_{Y}Al_{Z}(OH)_{(2(X + Y) + 3Z - 2)}CO₃ ·wH₂O (1)

[In the formula, x and y represent real numbers of 0 to 10 that have a relation of x + y = 1 to 10, z represents a real number of 1 to 5, and w represents a real number of 0 to 10.]

Examples of the hydrotalcites represented by General Formula (1) described above include Mg_{4.5}Al₂(OH)₁₃CO₃·3.5H₂O, Mg_{4.5}Al₂(OH)₁₃CO₃, Mg₄Al₂(OH)₁₂CO₃·3.5H₂O, Mg₆Al₂(OH)₁₆CO₃·4H₂O, Mg₅Al₂(OH)₁₄CO₃·4H₂O, Mg₃Al₂(OH)₁₀CO₃·1.7H₂O, Mg₃ZnAl₂(OH)₁₂CO₃·3.5H₂O, and Mg₃ZnAl₂(OH)₁₂CO₃.

In the rubber composition according to the present invention, various reinforcing agents, plasticizers, processing aids, flame retardants, pigments, crosslinking accelerators, and the like used in the art can be arbitrarily mixed in addition to the above-described substances as long as an effect of the present invention is not impaired. Furthermore, rubber, a resin, and the like can be blended in a usual way in the technical field as long as a characteristic of the present invention is not lost.

As the method of mixing the rubber composition according to the present invention, any means conventionally used in the field of polymer processing can be used, and for example, a mixing roll, a Banbury mixer, a kneader, or the like can be used. Examples of the method of molding include compression molding by a mold, extrusion molding, and injection molding.

The rubber material in which the rubber composition according to the present invention is used is preferably produced by crosslinking. Specifically, the rubber material is usually produced by heating to 100 to 200°C. The crosslinking time depends on the temperature, and is usually in the range of 0.5 to 300 minutes. As the method of crosslinking molding, any method can be used such as compression molding by a mold, injection molding, or heating by an air bath, infrared rays, or microwaves.

Hereinafter, the present invention will be described more specifically with reference to an example and a comparative example. Note that the present invention is not limited thereto.

First, compounding agents shown in Table 1 were kneaded by a pressure kneader at 120°C to prepare a kneading A compound. The kneading A compound was kneaded with an open roll to prepare a kneading B compound. In the row A of the table, the raw materials of the kneading A compound are shown, and in the row B, the raw materials are shown that are mixed with the kneading A compound in the preparing of the kneading B compound.

The compounding agents used in an example and a comparative example are shown below.
*1. A terpolymer of epichlorohydrin-ethylene oxide-allyl glycidyl ether "EPION-301" manufactured by OSAKA SODA CO., LTD.
*2. "Plastrogin J" manufactured by FUSO CHEMICAL CO., LTD.
*3. "NOCRAC 300" manufactured by OUCHI SHINKO CHEMICAL INDUSTRIAL CO., LTD.
*4. "PERCUMYL D-40 (dicumyl peroxide 40%)" manufactured by NOF Corporation
*5. "VULNOC PM" manufactured by OUCHI SHINKO CHEMICAL INDUSTRIAL CO., LTD.

**[Table 1]**

| Unit: part by mass | | | |
|---|---|---|---|
| Kneading | Material | Example | Comparative Example |
| | | 1 | 1 |
| A | Epihalohydrin rubber * 1 | 100 | 100 |
| | N-stearyl-D-gluconamide * 2 | 0.3 | 0.3 |
| | 4,4'-thiobis(3-methyl-6-tert-butylphenol) * 3 | 0.5 | |
| B | Dicumyl peroxide * 4 | 1.0 | 1.0 |
| | m-phenylenedimaleimide * 5 | 0.5 | 0.5 |

### <Crosslinking property>

The crosslinking property was measured using CURELASTOMETER 7 manufactured by JSR Trading Co., Ltd. in accordance with JIS K6300-2. The difference between the maximum torque (N·m) and the final torque (N·m) was measured as the crosslinking reversion at 160°C for 15 minutes.

Table 2 shows the test results of an example and a comparative example that were obtained by each test method.

**[Table 2]**

| | Example 1 | Comparative Example 1 |
|---|---|---|
| Maximum torque (N•m) | 0.671 | 0.651 |
| Crosslinking reversion (N•m) | 0.000 | 0.037 |

Table 2 shows that in Comparative Example 1, although the value of the maximum torque was sufficient, the crosslinking reversion was caused, and in Example 1, the crosslinking property was excellent so that the maximum torque was higher than that in Comparative Example 1, the crosslinking progressed more than in Comparative Example 1, and no crosslinking reversion was caused.

The rubber composition according to the present invention is excellent in the crosslinking property, and is widely applicable as a fuel hose, an air hose, or a tube material in automotive application, and as, in application to office automation, a semiconductive roller or a belt for development, charging, or transfer in an electrophotographic process in a copier or a printer.

## Claims

1. A rubber composition comprising:
a polyether-based polymer as a rubber component (a);
a crosslinking agent (b);
m-phenylenedimaleimide (c); and
an antioxidant (d).

2. The rubber composition according to claim 1, wherein the polyether-based polymer includes a constituent unit including at least two units selected from ethylene oxide, propylene oxide, epichlorohydrin, or allyl glycidyl ether.

3. The rubber composition according to claim 1 or 2, wherein the antioxidant (d) is at least one selected from a benzimidazole-based antioxidant, a nickel salt of a dialkyldithiocarbamic acid, an amine-based antioxidant, a phenol-based antioxidant, a thiourea-based antioxidant, an organic thio acid, or a phosphorous acid.

4. The rubber composition according to any one of claims 1 to 3, wherein the crosslinking agent (b) is an organic peroxide.

5. A rubber material using the rubber composition according to any one of claims 1 to 4.

6. A semiconductive rubber roll or a semiconductive endless rubber belt comprising the rubber material according to claim 5.

7. An electrophotographic device comprising the semiconductive rubber roll or the semiconductive endless rubber belt according to claim 6.
